# EUROPÄISCHE PATENTSCHRIFT

(11) **EP 3 520 596 B1**
(45) Veröffentlichungstag und Bekanntmachung des Hinweises auf die Patenterteilung: **26.05.2021**
(21) Anmeldenummer: 18207943.4
(22) Anmeldetag: 23.11.2018
(51) Int. Cl.: A01D 41/12

(54) **MÄHDRESCHER**
COMBINE HARVESTER
MOISSONNEUSE-BATTEUSE

(30) Priorität: 06.02.2018 DE 102018102594
(43) Veröffentlichungstag der Anmeldung: 07.08.2019
(73) Patentinhaber: CLAAS Selbstfahrende Erntemaschinen GmbH, 33428 Harsewinkel (DE)
(72) Erfinder: Piontek, Michael, 23701 Suesel (DE)
(74) Vertreter: CLAAS Gruppe

(56) Entgegenhaltungen:
- EP-A1- 1 269 822
- EP-A1- 2 138 025
- DE-A1-102005 056 553
- DE-A1-102009 042 002

## Beschreibung

Die vorliegende Anmeldung betrifft einen Mähdrescher gemäß dem Oberbegriff von Anspruch 1. Ein solcher Mähdrescher verfügt an seinem rückwärtigen Ende über eine Austrageinrichtung, mittels derer Pflanzenreste, die von den geernteten Pflanzen nach Ablösen der gewonnenen Früchte übrig bleiben, aus dem Mähdrescher ausgetragen werden. Somit wird beispielsweise im Zuge der Weizenernte nach Ablösen der Weizenkörner aus der Ähre zunächst eine Trennung der Weizenkörner von den übrigen Pflanzenresten vorgenommen, bevor die Pflanzenreste schließlich aus dem Mähdrescher ausgetragen werden. Hierbei ist es zum einen denkbar, die Pflanzenreste zu zerkleinern und sodann auf dem Feld abzulegen, sodass die Pflanzenreste leicht zersetzbar sind und wieder dem Nährstoffkreislauf zugeführt werden können. Zum anderen ist es denkbar, die Pflanzenreste als Ganzes, das heißt unzerkleinert, auf dem Feld abzulegen, sodass diese im Anschluss zur weiteren Verwendung aufgenommen werden können. Beispielsweise ist es üblich, derartige nicht-zerkleinerte Pflanzenreste zu Ballen zu formen und sodann im Rahmen der Viehwirtschaft weiter zu verwenden.

Das Ablösen der Früchte von den geernteten Pflanzen erfolgt mittels eines sogenannten Dreschorgans, das typischerweise eine um eine Rotationsachse drehantreibbaren Dreschtrommel umfasst. Bereits im Bereich des Dreschorgans wird sofort ein Großteil der abgelösten Früchte durch den sogenannten Dreschkorb hindurch abgeleitet und schließlich mittels einer Hebeeinrichtung in einen Korntank gefördert. Ein verbleibender Teil loser Früchte sowie die Pflanzenreste werden im Übrigen weiter zu dem Trennorgan geleitet, mittels dessen eine Trennung der verbliebenen Früchte von den Pflanzenresten erfolgt ("Restkornabscheidung"). Ein solches Trennorgan kann beispielsweise von einem Schüttler oder einem Rotor gebildet sein. Die mittels des Trennorgans gewonnenen Früchte werden sodann ebenfalls dem Korntank zugeführt, während die Pflanzenreste weiter in rückwärtige Richtung des Mähdreschers gefördert und schließlich aus dem Mähdrescher ausgetragen werden. Hierzu kommen sowohl die mindestens eine Fördereinrichtung als auch die mindestens eine Austrageinrichtung zum Einsatz. Dabei sind die Fördereinrichtung typischerweise einer feinen Siebstufe des Trennorgans und die Austrageinrichtung dem Zerkleinerungsorgan nachgeschaltet.

Vor der feinen Siebstufe des Trennorgans hat bereits eine Abscheidung grober Pflanzenreste von den Früchten (insbesondere Körnern) sowie feinen Pflanzenresten stattgefunden. Eine weitere Trennung der feinen Pflanzenreste von den Früchten erfolgt im Rahmen der Siebstufe typischerweise mittels einer Windsichtung in Kombination mit Sieben. Demgegenüber ist das Zerkleinerungsorgan dazu vorgesehen, die vergleichsweise groben Pflanzenreste, beispielsweise in Form von Stroh, zu zerkleinern bzw. zu häckseln, bevor sie aus dem Mähdrescher ausgetragen werden. In aller Regel werden sowohl die aus der Siebstufe des Trennorgans stammenden feinen Pflanzenreste als auch die durch das Zerkleinerungsorgan geführten Pflanzenreste an bzw. in der Austrageinrichtung zusammengeführt und mittels letzterer gemeinsam aus dem Mähdrescher ausgetragen. Die Fördereinrichtung dient mithin dazu, feine Pflanzenreste von dem Trennorgan, insbesondere von dessen Siebstufe, zu übernehmen und in Richtung der Austrageinrichtung zu fördern bzw. an diese zu übergeben. Da es sich bei den feinen Pflanzenresten in aller Regel um Spreu handelt, wird die Fördereinrichtungen typischerweise in Form eines Radialgebläses bzw. eines sogenannten "Spreugebläses" ausgebildet. Die Verteilvorrichtungen der Austrageinrichtung sind zudem oftmals in Form von Radialverteiler ausgeführt.

Mähdrescher der eingangs beschriebenen Art sind im Stand der Technik bereits bekannt. Hierzu wird beispielhaft auf die deutsche Offenlegungsschrift DE 10 2013 105 836 A1 verwiesen. Besagte Schrift befasst sich mit verschiedenen Betriebszuständen eines Mähdreschers, wobei in einem ersten Betriebszustand, dem Häckselbetrieb, die groben Pflanzenreste mittels des Zerkleinerungsorgans zerkleinert werden und in einem zweiten Betriebszustand das Zerkleinerungsorgan außer Betrieb ist. In letztgenanntem Betriebszustand werden - wie vorstehend beschrieben - die groben Pflanzenreste unzerkleinert auf dem Feld abgelegt. Dies wird auch als sogenannte "Schwadablage" bezeichnet.

Das genannte Dokument behandelt die Problematik der Ausrichtung der dortigen Fördereinrichtungen in Abhängigkeit des jeweiligen Betriebszustandes des Mähdreschers, wobei die als Spreugebläse ausgeführten Fördereinrichtungen während des Häckselbetriebs in Richtung der als Radialverteiler ausgeführten Verteilvorrichtungen ausgerichtet sind, sodass mittels der Fördereinrichtungen Pflanzenreste an die Verteilvorrichtungen übergebbar sind. Hingegen werden die Fördereinrichtungen während der Schwadablage um ihre Hochachse verdreht, sodass Austrittsöffnungen der Fördereinrichtungen seitlich zum Mähdrescher nach außen gerichtet sind. Die mittels der Fördereinrichtungen geförderten Pflanzenreste werden sodann nicht an die Verteilvorrichtungen übergeben, sondern unmittelbar aus dem Mähdrescher ausgetragen.

Im Betrieb bekannter Mähdrescher hat es sich insbesondere als problematisch erwiesen, dass im Zuge des vorstehend als Häckselbetrieb bezeichneten Betriebszustandes zu einer unbefriedigenden Verteilung der feinen Pflanzenreste, insbesondere der Spreu, bei Austrage derselben aus dem Mähdrescher kommt. Dies hat zur Folge, dass auf dem Feld vor allem in einem Bereich unmittelbar hinter dem Mähdrescher eine besonders hohe Konzentration der feinen Pflanzenreste zu finden ist, während in weiter seitlich entfernt vom Mähdrescher befindlichen Bereichen besagte Konzentration deutlich abnimmt. Diese Problematik ist insbesondere dann zu beobachten, wenn heutzutage durchaus übliche, besonders breit ausgeführte Schneidwerke zum Einsatz kommen, mittels derer der Mähdrescher eine Arbeitsbreite von 10 m oder mehr abdecken kann. Es versteht sich, dass eine gleichmäßige Verteilung der rückwärtig aus dem Mähdrescher ausgetragenen Pflanzenreste über eine solche erhebliche Breite schwieriger zu bewerkstelligen ist als dies bei Verwendung geringerer Arbeitsbreiten der Fall ist. Die gleichmäßige Verteilung der Pflanzenreste über die Arbeitsbreite des Mähdreschers hinweg ist jedoch besonders gewünscht, um sowohl die Pflanzenreste als solche als auch die weiterhin in den Pflanzenresten verborgenen Restkornbestandteile gleichmäßig dem Boden zuzuführen und letzterem als Nährstoff zur Verfügung zu stellen. Eine Konzentration auf diese Weise rezirkulierter Nährstoffe in einem bestimmten Bereich hinter dem Mähdrescher bei gleichzeitiger Vernachlässigung weiter außenliegender Bereiche ist hingegen unerwünscht.

Der vorliegenden Anmeldung liegt mithin die Aufgabe zugrunde, einen Mähdrescher hervorzubringen, mittels der eine gleichmäßigere Verteilung der ausgetragenen Pflanzenreste über die Arbeitsbreite desselben hinweg ermöglicht ist.

Die zugrunde liegende Aufgabe wird erfindungsgemäß mittels eines Mähdreschers mit den Merkmalen des Anspruchs 1 gelöst. Vorteilhafte Ausgestaltungen ergeben sich aus den Unteransprüchen 2 bis 12.

Erfindungsgemäß sind an den Verteilvorrichtungen angeordnete Eintrittsstellen, durch die hindurch der von den Fördereinrichtungen an die Verteilvorrichtungen übergebene Gutstrom in die Verteilvorrichtungen einströmen kann, außerhalb eines Wirkungsbereich des Teilelements angeordnet.

Das Teilelement, das beispielsweise von einem aus Metallblech geformten Keil gebildet sein kann, dient dazu, den von dem Zerkleinerungsorgan stammenden Gutstrom aufzuteilen und jeweils in etwa hälftig den beiden Verteilvorrichtungen zuzuschlagen. Entsprechend ist das Teilelement in aller Regel in einem Mittelbereich zwischen den Verteilvorrichtungen angeordnet und befindet sich - in Strömungsrichtung des von dem Zerkleinerungsorgan stammenden Gutstroms betrachtet - leicht vor den Verteilvorrichtungen, sodass die Aufteilung des Gutstroms gewissermaßen vor den Verteilvorrichtungen stattfinden kann. Die Zuführung der von dem Zerkleinerungsorgan stammenden Pflanzenreste zu den Verteilvorrichtungen erfolgt normalerweise derart, dass die Pflanzenreste sich entlang des Teilelements bewegen und folglich - aufgrund der mittigen Anordnung des Teilelements bezogen auf die Verteileinrichtungen - größtenteils in einander zugewandten Randbereichen der Verteilvorrichtungen in selbige eintreten. Mit anderen Worten ist ein Massenstrom der von dem Zerkleinerungsorgan stammenden Pflanzenreste in dem Mittelbereich der Austrageinrichtung bzw. den einander zugewandten Randbereichen der Verteilvorrichtungen konzentriert und nimmt in Richtung der einander abgewandten Randbereiche der Verteilvorrichtungen ab. Folglich gelangt von den zerkleinerten Pflanzenresten lediglich ein vergleichsweise geringer Anteil in die einander abgewandten Randbereiche der Verteilvorrichtungen. In jedem Falle wirkt das Teilelement mittig zwischen den Verteilvorrichtungen, wodurch der "Wirkungsbereich" des Teilelements in dem Mittelbereich der Austrageinrichtung liegt.

Erfindungsgemäß sind nunmehr die Eintrittsstellen an den Verteilvorrichtungen außerhalb des genannten Wirkungsbereichs angeordnet, vorzugsweise in den voneinander abgewandten seitlichen Randbereichen derselben. Diese Ausgestaltung hat viele Vorteile. Zunächst besteht der unmittelbare technische Effekt der erfindungsgemäßen Anordnung der Eintrittsstellen darin, dass die jeweilige Verteilvorrichtung, in die der von der Fördereinrichtung übernommene Teil des Gutstroms von Pflanzenresten eingebracht wird, in dem Bereich der besagten Eintrittsstelle nicht bereits vollständig mit den Pflanzenresten gefüllt ist, die von dem Zerkleinerungsorgan stammen. Die räumliche Entzerrung der Eintrittsstelle der von der Fördereinrichtungen stammenden Pflanzenreste von einem Zuführbereich der von dem Zerkleinerungsorgan stammenden Pflanzenreste führt mithin dazu, dass die Verteilvorrichtung im Bereich der Eintrittsstelle noch in solchen Umfang "frei" von Pflanzenresten ist, dass die von der Fördereinrichtungen stammenden Pflanzenreste vergleichsweise gut aufgenommen werden können.

Im Stand der Technik werden hingegen die Pflanzenreste der Fördereinrichtungen sowie diejenigen des Zerkleinerungsorgans typischerweise an einander überschneidenden oder sogar gleichen Eintrittsstellen bzw. Eintrittsbereichen an die jeweilige Verteilvorrichtung übergeben. Dies hat zur Folge, dass sich die Pflanzenreste gewissermaßen gegenseitig blockieren, wobei vor allem die vergleichsweise feinen Pflanzenreste, die von der Fördereinrichtungen bzw. der feinen Siebstufe stammen, von den vergleichsweise groben Pflanzenresten des Zerkleinerungsorgans verdrängt werden. Dabei hat sich herausgestellt, dass feine Pflanzenreste konzentriert in die innerhalb der jeweiligen Verteilvorrichtung befindlichen groben Pflanzenreste "eingedrückt" werden und sodann im Zuge des Austrags des gesamten Gemischs sämtlicher Pflanzenreste am rückwärtigen Ende des Mähdreschers gleichermaßen konzentriert ausgeworfen werden. Die Folge dessen ist, dass die vorstehend als problematisch beschriebene ungleichmäßige Verteilung der feinen Pflanzenreste über die Arbeitsbreite des Mähdreschers hinweg stattfindet, wobei die feinen Pflanzenreste über einen Bruchteil der Arbeitsbreite konzentriert vorliegen. Die nunmehr entzerrte Einbringung der feinen Pflanzenreste sowie der zerkleinerten Pflanzenreste in die Verteilvorrichtungen führt demgegenüber zu einer besseren Durchmischung der verschiedenen Pflanzenrestarten innerhalb der Verteilvorrichtung, worauf hin sodann im Zuge des Auftrags sämtlicher Pflanzenreste mittels der Verteilvorrichtung wunschgemäß ein Vergleichmäßigung stattfindet. Im Ergebnis hat sich herausgestellt, dass gerade die feinen Pflanzenreste wie gewünscht deutlich gleichmäßiger über die Arbeitsbreite des Mähdreschers verteilt werden können.

Um den vorstehend als "entzerrt" beschriebenen Eintrag der verschiedenen Gutströme der Pflanzenreste (zum einen von der Fördereinrichtung und zum anderen von dem Zerkleinerungsorgan) in die Austrageinrichtung sicherstellen zu können, ist es besonders vorteilhaft, wenn eine jeweilige Verteilvorrichtung derart ausgebildet ist, dass die Eintrittsstelle für die von der Fördereinrichtungen stammenden Pflanzenreste strömungstechnisch vor dem Teilelement angeordnet ist. Das heißt, dass die Ausgestaltung vorteilhafterweise derart sein sollte, dass die von der Fördereinrichtung übernommenen Pflanzenreste in die jeweilige Verteilvorrichtung gelangen, bevor der Großteil der von dem Zerkleinerungsorgan stammenden Pflanzenreste zugeführt wird. Die Betrachtung der Strömungsrichtung ist dabei im Hinblick auf die Führung der Pflanzenreste innerhalb der jeweiligen Verteilvorrichtung zu verstehen.

Dieses Prinzip wird insbesondere dann deutlich, wenn die Verteilvorrichtungen in einer vorteilhaften Ausgestaltung des erfindungsgemäßen Mähdreschers jeweils von einem Radialverteiler gebildet sind. Ein solcher Radialverteiler umfasst ein in aller Regel kreisringförmiges Gehäuse sowie einen innerhalb des Gehäuses drehantreibbaren Rotor, der mindestens ein Schaufelelement umfasst. Typischerweise ist der Rotor mit einer Mehrzahl von Schaufelelementen ausgestattet. Die Rotation des Rotors innerhalb des Gehäuses führt dazu, dass das bzw. die Schaufelelemente einen in den Radialverteiler eintretenden Gutstrom erfassen und in radiale Richtung bezogen auf eine Drehachse des Rotors beschleunigen. Der Gutstrom "strömt" daraufhin innerhalb des Radialverteilers. An einer Hinterseite des jeweiligen Radialverteilers, die einem vorderen Ende des Mähdreschers abgewandt ist, ist der Radialverteiler in aller Regel geöffnet, sodass der erfasste und beschleunigte Gutstrom von Pflanzenresten nach hinten ausgeworfen werden kann. Im Sinne der vorstehend beschriebenen aufeinanderfolgenden Zuführung der verschiedenen Gutströme von Pflanzenresten, nämlich zum einen von der Fördereinrichtungen und zum anderen von dem Zerkleinerungsorgan, sollte der Radialverteiler derart ausgebildet und/oder ausgerichtet sein, dass sich der Rotor mitsamt seinem Schaufelelement bzw. seiner Schaufelelemente derart innerhalb des Gehäuses dreht, dass das Schaufelelement bzw. die Schaufelelemente ausgehend von der rückwärtigen Öffnung des jeweiligen Radialverteilers zuerst an der Eintrittsstelle für den von der Fördereinrichtungen übernommenen Gutstrom und erst anschließend zu dem Teilelement gelangt bzw. gelangen. Auf diese Weise ist sichergestellt, dass die "Beladung" des Radialverteilers mit dem von der Fördereinrichtung stammenden Gutstrom zu einem Zeitpunkt stattfindet, zu dem der Radialverteiler noch zumindest im Wesentlichen "leer" oder maximal lediglich teilweise mit solchen Pflanzenresten gefüllt ist, die von dem Zerkleinerungsorgan stammen. In jedem Fall ist der Radialverteiler nicht - wie im Stand der Technik - bereits zum übergroßen Teil oder sogar vollständig mit den von dem Zerkleinerungsorgan stammenden Pflanzenresten gefüllt, wodurch - wie beschrieben - eine einheitliche Verteilung der leichten, von der Fördereinrichtungen stammenden Pflanzenreste behindert wird.

In einer weiterhin vorteilhaften Ausgestaltung des erfindungsgemäßen Mähdreschers umfasst die Austrageinrichtung zwei Abscheidebauteile, die insbesondere in Form von Abscheideblechen ausgeführt sein können. Die Verwendung derartiger Abscheidebauteile kommt insbesondere dann infrage, wenn die Verteilvorrichtungen in Form der vorstehend beschriebenen Radialverteiler ausgebildet sind. Vorzugsweise ist mindestens ein Abscheidebauteil jeweils einem der Radialverteiler zugeordnet, wobei das Abscheidebauteil derart an dem Gehäuse des jeweils zugeordneten Radialverteilers angeordnet ist, dass ein mittels des Rotors bzw. eines zugeordneten Schaufelelement erzeugter, tangential gerichteter Luftstrom mittels des Abscheidebauteils radial nach außen hin abscheidbar ist. Die Abscheidebauteile können insbesondere bewirken, dass die Einströmung der leichten Pflanzenreste in den jeweiligen Radialverteiler, die größtenteils von der Fördereinrichtung übernommen werden, möglichst ungestört von tangentialen Luftströmungen des Radialverteilers stattfinden kann. Insbesondere kann ein Staudruck im Bereich der Eintrittsstelle an dem Radialverteiler reduziert werden.

Bei Verwendung derartiger Abscheidebauteile ist es weiterhin besonders von Vorteil, wenn diese in Rotationsrichtung des Rotors betrachtet vor der Eintrittsstelle des von der Fördereinrichtung stammenden Gutstroms angeordnet sind. Auf diese Weise wird die Abscheidung des beschriebenen tangentialen Luftstroms des Radialverteilers unmittelbar vor der Eintrittsstelle des von der Fördereinrichtung stammenden Gutstroms vorgenommen, wodurch das Risiko einer Einwirkung eines solchen Luftstroms auf besagten Gutstrom minimiert wird.

Entsprechend Anspruch 1 ist das Teilelement in einem Mittelbereich zwischen den Verteilvorrichtungen angeordnet und erstreckt sich in Richtung des Zerkleinerungsorgans. Auf diese Weise ist das Teilelement dazu geeignet, den von dem Zerkleinerungsorgan stammenden Gutstrom in zwei Teilströme aufzuteilen und diese sodann jeweils einer der Verteilvorrichtungen zuzuführen. Diese Funktionalität des Teilelements ist vorstehend bereits dargelegt, wobei es besondere von Vorteil sein kann, dass infolge der Anordnung des Teilelement in dem genannten Mittelbereich die Zuführung der von dem Zerkleinerungsorgan stammenden Pflanzenreste zu den Verteilvorrichtungen schwerpunktmäßig in deren einander zugewandten Randbereichen bzw. im Mittelbereich der Austrageinrichtung stattfindet. Auf diese Weise können die Eintrittsstellen für von der Fördereinrichtung stammende Pflanzenreste besonders einfach in seitlichen, voneinander abgewandten Randbereichen der Verteilvorrichtungen positioniert werden, wodurch die gewünschte Entzerrung der Zuführung der Gutströme von der Fördereinrichtung und dem Zerkleinerungsorgan bewerkstelligt ist.

Betreffend das Teilelement kann es weiterhin vorteilhaft sein, wenn dieses zum einen einen Keilabschnitt und zum anderen einen sich einen Keilabschnitt anschließenden Konstantabschnitt aufweist. Der Konstantabschnitt befindet sich dabei in Strömungsrichtung des von dem Zerkleinerungsorgan stammenden Gutstroms hinter dem Keilabschnitt, vorzugsweise schließt sich der Konstantabschnitt unmittelbar an den Keilabschnitt an. Der Keilabschnitt ist dadurch gekennzeichnet, dass sich ein Querschnitt des Teilelements in Strömungsrichtung der Pflanzenreste erweitert, typischerweise stetig erweitert. Im Konstantabschnitt ist besagter Querschnitt hingegen konstant ausgebildet.

Die Verwendung eines keilförmigen Teilelements zur Aufteilung des von dem Zerkleinerungsorgan stammenden Gutstroms auf zwei Verteileinrichtungen ist im Stand der Technik grundsätzlich bereits bekannt. Allerdings hat es sich hinsichtlich der Strömungsverhältnisse als nachteilig herausgestellt, ein keilförmiges Teilelement in unmittelbarer Nähe zu einer als Radialverteiler ausgebildeten Verteilvorrichtung anzuordnen. Es hat sich nämlich ergeben, dass das Teilelement aufgrund seiner Keilform für eine an der Verteilvorrichtung vorliegende tangentiale Luftströmung wie ein Abscheidebauteil wirkt und eine Umlenkung der besagten Luftströmung in Richtung einer Vorderseite des Mähdreschers bewirkt. Besagte Luftströmung kann sodann hinderlich sowohl auf den von dem Zerkleinerungsorgan stammenden Gutstrom als auch auf den von der Fördereinrichtung stammenden Gutstrom wirken, da die Strömungsrichtung der Luftströmung den Strömungsrichtungen besagter Gutströme entgegen gerichtet ist. Dies kann insbesondere dazu führen, dass die vergleichsweise leichten Pflanzenreste, die die Verteilvorrichtungen von der Fördereinrichtung übernehmen, "verblasen" werden und nicht wie gewünscht in die Verteilvorrichtungen gelangen.

Die vorstehend als vorteilhaft beschriebene Ausgestaltung des Teilelements mit einem sich an den Keilabschnitt anschließenden Konstantabschnitt bietet nunmehr den Vorteil, dass das Teilelement sich nicht unmittelbar mit seinem Keilabschnitt bis an die Verteilvorrichtungen erstreckt, sondern nur mit seinem Konstantabschnitt. Da sich das Teilelement innerhalb seines Konstantabschnitts nicht erweitert, sondern einen konstanten Querschnitt aufweist, entfaltet das Teilelement mittels des Konstantabschnitts nicht dieselbe Abscheidewirkung, die im Stand der Technik bei Verwendung typischer keilförmiger Teilelemente zu beobachten ist. Entsprechend ergibt sich bei Verwendung des vorteilhaften Teilelements eine geringere Irritation der Gutströme von Pflanzenresten im Zuge der Einströmung in die Verteilvorrichtungen.

In dem Zusammenhang hat es sich als besonders vorteilhaft herausgestellt, wenn sich das Teilelement so weit in Richtung des Zerkleinerungsorgans erstreckt, dass sich der Keilabschnitt desselben - in Strömungsrichtungen des von dem Zerkleinerungsorgan stammenden Gutstroms betrachtet - außerhalb eines Wirkungsbereich der Verteilvorrichtungen befindet. Letztgenannter "Wirkungsbereich" betrifft insbesondere die vorstehend beschriebenen tangentialen Luftströmungen, die von den Verteilvorrichtungen typischerweise verursacht werden (insbesondere sofern diese von Radialverteiler gebildet sind). Besagte Luftströmungen treten lediglich innerhalb des Wirkungsbereichs auf.

Diese Ausgestaltung ist zudem insoweit als vorteilhaft zu bewerten, als die in sich gerade Ausbildung des Teilelements innerhalb des Konstantabschnitts ein Verstopfungsrisiko der Verteilvorrichtungen im Bereich des Keilelements deutlich reduziert. Eine Verstopfung kann beispielsweise auftreten, wenn die Pflanzenreste (insbesondere die von dem Zerkleinerungsorgan stammenden) feucht oder nass sind und stark aneinander haften und verklumpen. Im Bereich des Teilelements findet prinzipbedingt eine gewisse Stauchung bzw. Pressung der Pflanzenreste statt. Das sich im Stand der Technik bis unmittelbar an die Verteilvorrichtungen erstreckende, in Keilform ausgebildete Teilelement schließt dann mit den typischerweise kreisförmig ausgebildeten Verteilvorrichtungen einen V-förmigen Zwickel aus, in dem die Pflanzenreste kumulieren und "eingeklemmt" werden. Die Führung des Teilelements bis an die Verteilvorrichtungen mittels eines Konstantabschnitts reduziert dieses Risiko erheblich, da der beschriebene Zwickel deutlich kleiner ausgebildet ist und weniger Raum zur Ansammlung von Pflanzenresten bietet. Die längere Erstreckung des Teilelements in Richtung des Zerkleinerungsorgans verlegt zudem die "Teilstelle", an der der von dem Zerkleinerungsorgan stammende Gutstrom aufgeteilt wird, räumlich von den Verteilvorrichtungen weg, sodass die Pflanzenreste sich bis zum Eintritt in die Verteilvorrichtungen grundsätzlich besser verteilen als bei Verwendung bekannter "kurzer" Teilelemente, die keinen Konstantabschnitt aufweisen.

In einer weiterhin vorteilhaften Ausgestaltung des erfindungsgemäßen Mähdreschers sind einem Frontende des Mähdreschers zugewandte Vorderseiten der Verteilvorrichtungen geöffnet ausgebildet, wobei sich die der jeweiligen Verteilvorrichtung zugeordnete Eintrittsstelle des von der Fördereinrichtung stammenden Gutstroms in einem der jeweils anderen Verteilvorrichtung abgewandten, seitlichen Randbereich der jeweiligen Vorderseite befindet. Dabei ist es grundsätzlich möglich, dass die Eintrittsstelle zumindest zu einem Mittelbereich der jeweiligen Verteilvorrichtung hin gewandt nicht baulich begrenzt ist, beispielsweise mittels einer Wandung eines Gehäuses der Verteilvorrichtung oder dergleichen. Stattdessen kann die Eintrittsstelle beispielsweise lediglich an einem seitlich außenliegenden Ende baulich begrenzt sein. In jedem Fall ist die Eintrittsstelle dadurch definiert, dass die Verteilvorrichtungen und die mindestens eine Fördereinrichtung derart relativ zueinander ausgerichtet sind, dass der von der Fördereinrichtung stammend Gutstrom an der jeweiligen Eintrittsstelle in die jeweilige Verteilvorrichtung eintritt. Insbesondere kann die Fördereinrichtung den aus ihr austretenden Pflanzenresten eine Abströmrichtung aufprägen und somit gewissermaßen die Eintrittsstellen "anpeilen" bzw. auf sie zielen.

Zur Vermeidung des Verlusts von Pflanzenresten im Zuge der Übergänge zwischen der Fördereinrichtung und den Verteilvorrichtungen und/oder zwischen dem Zerkleinerungsorgan und der Verteilvorrichtung kann es von Vorteil sein, wenn die Verteilvorrichtungen in ihrem Mittelbereich von unten mittels eines Bodenelements geschlossen sind, sodass ein Verlust von Pflanzenresten nach unten an den Verteilvorrichtungen vorbei vermieden wird. Eine Breite des Bodenelements kann beispielsweise 80 cm (ausgehend von der Mitte 40 cm zu jeder Seite) betragen. Eine entsprechende Ausführung ist dem Ausführungsbeispiel entnehmbar.

Bei besagter seitlicher Anordnung der Eintrittsstellen an den Verteilvorrichtungen kann es weiterhin vorteilhaft sein, wenn der von dem Zerkleinerungsorgan stammende Gutstrom den Verteilvorrichtungen über deren jeweilige gesamte Breite zuführbar ist. Auf diese Weise kann besagter Gutstrom möglichst einheitlich in der Verteilvorrichtung verteilt werden, wodurch eine Verstopfung vermieden wird. Vorteilhafterweise wird die Verteilung derart vorgenommen, dass ein Hauptteil des von dem Zerkleinerungsorgan stammenden Gutstroms, insbesondere mindestens 50 %, vorzugsweise mindestens 60 %, weiter vorzugsweise mindestens 70 %, desselben, einer jeweiligen Verteilvorrichtung in einem Mittelbereich der zugehörigen Vorderseite zuführbar ist, der der jeweilig zugeordneten Verteilvorrichtung zugewandt ist. Auf diese Weise wird sichergestellt, dass der von dem Zerkleinerungsorgan stammende Gutstrom den von der Fördereinrichtung stammenden Gutstrom möglichst wenig behindert.

Unabhängig von der übrigen Ausgestaltung des erfindungsgemäßen Mähdreschers ist es besonders vorteilhaft, wenn die Fördereinrichtung von einem Radialgebläse gebildet ist. Mittels eines solchen Radialgebläses ist der von dem Trennorgan übernommene Gutstrom, der typischerweise von leichten Pflanzenresten gebildet ist, besonders gut beschleunigbar und in Richtung der Austrageinrichtung blasbar.

In einer besonders vorteilhaften Ausführung umfasst der erfindungsgemäße Mähdrescher zwei Fördereinrichtungen, die in Breitenrichtung des Mähdreschers betrachtet nebeneinander angeordnet sind, wobei vorzugsweise beide Fördereinrichtungen jeweils von einem Radialgebläse gebildet sind. Hierbei ist es besonders von Vorteil, wenn Austrittsöffnungen dieser Radialgebläse, durch die hindurch der von Pflanzenresten gebildete Gutstrom in Richtung der Austrageinrichtung gefördert wird, in voneinander abgewandten, seitlichen Randbereichen der Radialgebläse angeordnet sind. Diese Ausgestaltung ist insbesondere dann günstig, wenn den Radialgebläsen zugeordnete Eintrittsstellen an den Verteilvorrichtungen gleichermaßen in seitlichen, voneinander abgewandten Randbereichen der Verteilvorrichtungen angeordnet sind. Eine Strömungsstrecke, die der von den Fördereinrichtungen stammende Gutstrom frei überbrücken muss, ist bei dieser Ausgestaltung mithin vergleichsweise kurz.

Um die Förderung des Gutstroms mittels der als Radialgebläse ausgebildeten Fördereinrichtungen weiter zu verbessern, kann es ferner vorteilhaft sein, deren Austrittsöffnungen jeweils mit einem Führungskanalstummel zu versehen, mittels dessen ein gerichteter Austritt des Gutstroms aus den Radialgebläsen in Richtung der zugeordneten Eintrittsstellen ermöglicht ist. Auf diese Weise ist der Anteil des von den Fördereinrichtungen übergebenen Gutstroms, der sodann tatsächlich in den Verteilvorrichtungen ankommt, besonders groß, während umgekehrt der Verlust von Pflanzenresten auf der Förderstrecke zwischen den Fördereinrichtungen und den Verteilvorrichtungen minimiert ist.

Der erfindungsgemäße Mähdrescher ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Eine schematische Draufsicht einer erfindungsgemäßen Einbausituation zweier Fördereinrichtungen sowie einer zwei Verteilvorrichtungen umfassenden Austrageinrichtung des erfindungsgemäßen Mähdreschers gemäß Figur 1,
- Fig. 3:: Eine schematische Seitenansicht der Einbausituation gemäß Figur 2,
- Fig. 4:: Ein schematischer Querschnitt durch den Mähdrescher gemäß Figur 1 im Bereich vor der Austrageinrichtung,
- Fig. 5:: Ein schematischer Längsschnitt durch den Mähdrescher gemäß Figur 1 im Bereich der Austrageinrichtung und
- Fig. 6:: Eine schematische Draufsicht einer erfindungsgemäßen Einbausituation zweier Fördereinrichtungen sowie einer zwei Verteilvorrichtungen umfassenden Austrageinrichtung des erfindungsgemäßen Mähdreschers gemäß Figur 1.

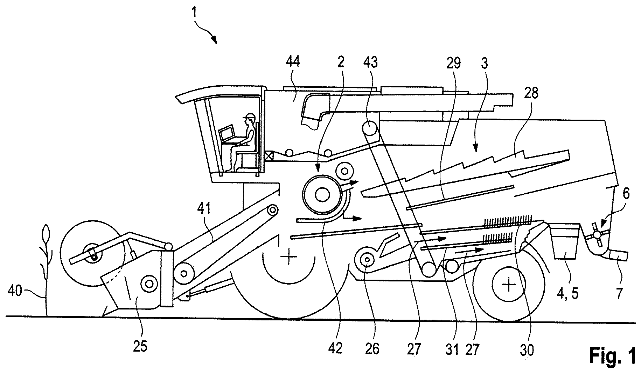

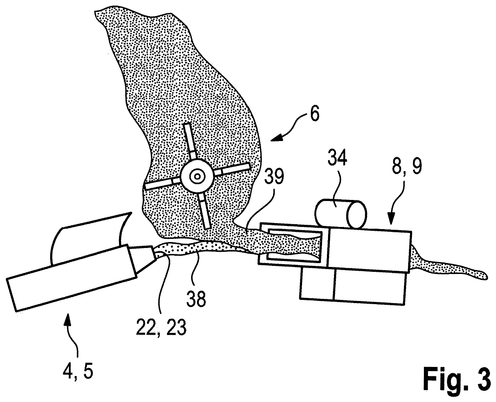

Ein Ausführungsbeispiel, das in den **Figuren 1 bis 6** dargestellt ist, umfasst einen erfindungsgemäßen Mähdrescher **1**, der mit einem Dreschorgan **2**, einem Trennorgan **3**, zwei Fördereinrichtungen **4**, **5**, einen Zerkleinerungsorgan **6** sowie eine Austrageinrichtung **7** ausgestattet ist. Ferner umfasst der Mähdrescher **1** an seinem vorderen Ende ein Schneidwerk **25**. Mittels dieses Schneidwerks **25** ist der Mähdrescher **1** dazu geeignet, Pflanzen **40**, die auf einem Feld aufstehen, zu schneiden und sodann mittels eines Schrägförderers **41** in Richtung des Dreschorgans **2** zu leiten. Mittels des Dreschorgans **2** werden sodann Früchte von den Pflanzen **40** abgetrennt bzw. abgelöst, sodass fortan die Pflanzen **40** zumindest im Wesentlichen in Früchte und Pflanzenreste aufgeteilt sind. Ein Großteil der abgelösten Früchte wird unmittelbar durch einen Dreschkorb **42** hindurch ausgehend von dem Dreschorgans **2** nach unten hin abgeleitet, während ferner ein Gemisch aus restlichen Früchten und Pflanzenresten in Richtung des Trennorgans **3** weitergeleitet wird. Letzteres ist dazu geeignet, die verbliebenen Früchte, die nicht unmittelbar durch den Dreschkorb **42** abgeleitet wurden, von den Pflanzenresten zu trennen, sodass die Früchte gesammelt und die Pflanzenreste aus dem Mähdrescher **1** ausgetragen werden können.

Hierzu verfügt das Trennorgan **3** in dem gezeigten Beispiel über einen Hordenschüttler **28**, mittels dessen mittels zyklischer Bewegungen die verbliebenen Früchte von Pflanzenresten ausgesiebt werden, während die Pflanzenreste, insbesondere grobe Pflanzenreste beispielsweise in Form von Stroh, im Wesentlichen in Richtung eines rückwärtigen Endes des Mähdrescher **1** abtransportiert werden. Die verhältnismäßig kleinen Früchte sowie feine Pflanzenreste werden durch den Hordenschüttler **28** nach unten auf einen Rücklaufboden **29** des Trennorgans **3** geleitet, mittels dessen diese Bestandteile zunächst in Richtung des vorderen Endes des Mähdrescher **1** geleitet werden. Sodann werden besagte Bestandteile einer Siebstufe zugeführt, die in dem gezeigten Beispiel von einem Obersieb **30** sowie einem Untersieb **31** gebildet ist. Diese Siebstufe wirkt mit einem Gebläse **26** zusammen, mittels dessen feine Pflanzenreste, beispielsweise bei der Getreideernte anfallende Spreu, von den zu gewinnenden Früchten separiert werden. Ein mittels des Gebläses **26** verursachter Luftstrom ist in **Figur 1** mittels der dort gezeigten Pfeile **27** veranschaulicht. Die auf diese Weise schließlich gewonnen Früchte werden mittels einer Hebeeinrichtung **43** einem Korntank **44** des Mähdreschers **1** zugeführt.

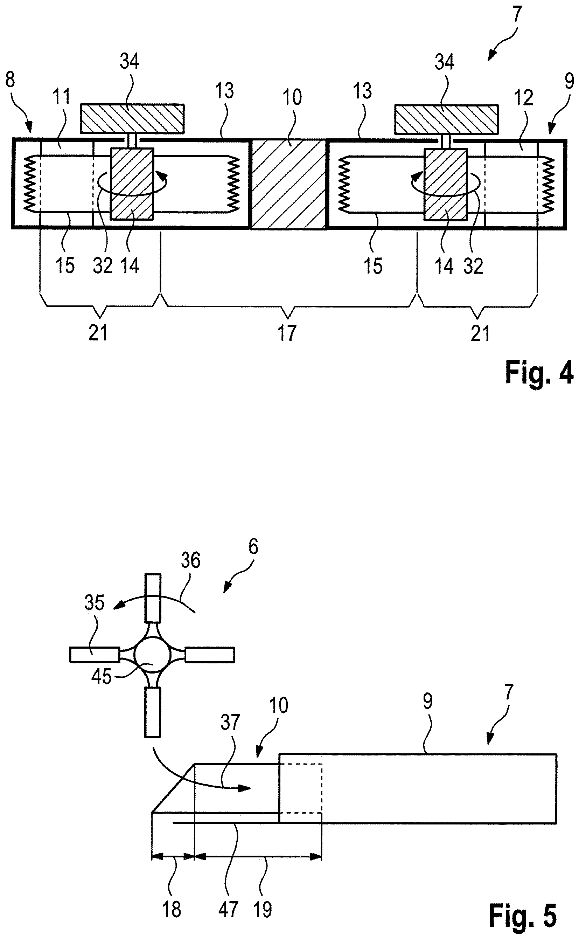

An dem rückwärtigen Ende des Mähdreschers **1** findet gewissermaßen eine Nachbehandlung der verschiedenen Pflanzenreste statt, die im Rahmen der Ernte der Pflanzen **40** angefallen sind. Hierbei besteht regelmäßig das Interesse, die Pflanzenreste wieder dem Boden zuzuführen, sodass zumindest eine gewisse Rückführung von Nährstoffen in den Boden stattfinden kann. Dies betrifft auch den sogenannten Restkornanteil, das heißt ein trotz sämtlicher Trennbemühungen in den Pflanzenresten verbliebener Anteil von Früchten, der gemeinsam mit den Pflanzenresten aus dem Mähdrescher **1** ausgetragen wird. Insbesondere dann, wenn die Pflanzenreste nach ihrem Auswurf aus dem Mähdrescher **1** auf dem Boden verbleiben sollen und nicht im weiteren aufgenommen und sodann weiterverwendet werden sollen (beispielsweise in der Viehwirtschaft), wird zwecks leichterer Zersetzung der Pflanzenreste und der daraufhin stattfindenden Aufnahme der in diesen enthaltenen Nährstoffe durch den Boden zumindest für die groben Pflanzenreste zunächst eine Zerkleinerung vorgenommen. Hierfür kommt das bereits genannte Zerkleinerungsorgan **6** zum Einsatz, mittels dessen die groben, rückwärtig an dem Hordenschüttler **28** abgeschiedenen Pflanzenreste übernommen und zerkleinert werden. Das Zerkleinerungsorgan **6** kann insbesondere eine Welle **45** sowie über seinen Umfang seitlich an der Welle **45** verteilte Schlagleisten **35** aufweisen, die im Zuge einer Rotation der Welle **45** um ihre Längsachse (Pfeil **36** in **Figur 5**) die Pflanzenreste regelrecht zerschlagen. Die feinen Pflanzenreste, die ausgehend von der Siebstufe aus dem Mähdrescher **1** ausgetragen werden, bedürfen einer solchen Zerkleinerung in aller Regel nicht und werden demzufolge in dem gezeigten Beispiel nicht dem Zerkleinerungsorgan **6** zugeführt.

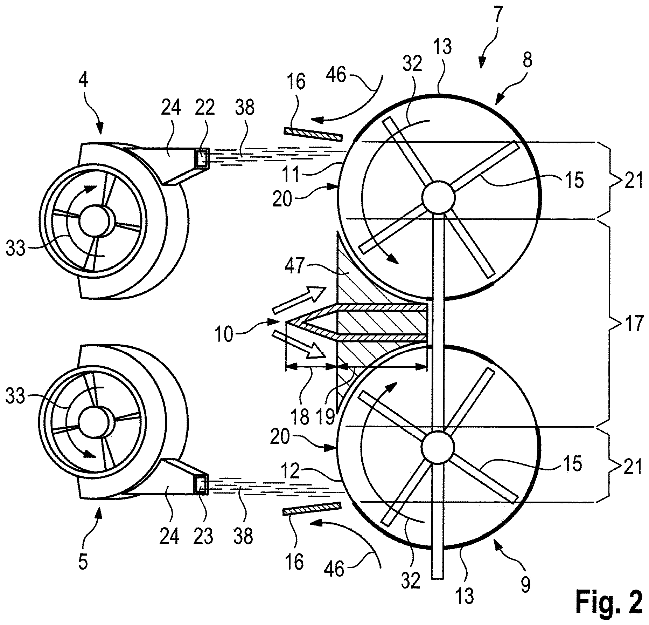

Beim Austragen der Pflanzenreste aus dem Mähdrescher **1** ist es von besonderer Bedeutung, dass die Verteilung der Pflanzenreste auf dem Boden möglichst einheitlich stattfindet. Hierzu werden die Pflanzenreste mittels der Austrageinrichtung **7** verarbeitet. Letztere umfasst in dem gezeigten Beispiel zwei Verteilvorrichtungen **8**, **9**, die sich insbesondere aus den **Figuren 2****,** **4** **und** **6** ergeben. Die Verteilvorrichtungen **8**, **9** sind hier jeweils von einem Radialverteiler gebildet, der ein Gehäuse **13** in Form eines Kreisrings sowie eine innerhalb des Gehäuses **13** drehantreibbar gelagerten Rotor **14** umfasst. Der Rotor **14**, der mittels eines oberhalb des Gehäuses **13** angeordneten Antriebs **34** drehantreibbar ist, wird hier mit vier Schaufelelementen **15** zusammen, die dazu geeignet sind, in die jeweilige Verteilvorrichtung **8**, **9** eintretende Pflanzenreste zu erfassen und zu beschleunigen, sodass diese an dem rückwärtigen Ende des Mähdreschers 1 bzw. einer Rückseite der Austrageinrichtung **7** mit erhöhter Geschwindigkeit "weggeschleudert" werden können. Hierdurch ist es möglich, die Pflanzenreste ausgehend von dem vergleichsweise schmalen Ende des Mähdreschers **1** auf einen Bereich zu verteilen, der sich über eine demgegenüber deutlich größere Arbeitsbreite des Schneidwerks **25** erstreckt.

Die Austrageinrichtung **7** übernimmt in dem gezeigten Beispiel zwei separate Gutströme **38**, **39** von Pflanzenresten, nämlich zum einen unmittelbar von dem Zerkleinerungsorgan **6** und zum anderen von den beiden Fördereinrichtungen **4**, **5.** Zur Übernahme der zerkleinerten Pflanzenreste von dem Zerkleinerungsorgan **6** umfasst die Austrageinrichtung **7** ein Teilelement **10**, das mittig zwischen den Verteilvorrichtungen **8**, **9** positioniert ist. Das Teilelement **10**, das in dem gezeigten Beispiel einen vorderseitigen Keilabschnitt **18** sowie einen sich daran anschließenden Konstantabschnitt **19** aufweist, dient dazu, den von dem Zerkleinerungsorgan **6** stammenden Gutstrom **39** der Pflanzenreste auf die beiden Verteilvorrichtungen **8**, **9** aufzuteilen. Hierzu erstreckt sich das Teilelement **10** in Richtung des Zerkleinerungsorgans **6** wie sich beispielsweise anhand von **Figur 5** ergibt. Ein mittels des Teilelements **10** in Richtung der linken Verteilvorrichtungen **9** abgetrennter Teilstrom des von dem Zerkleinerungsorgan **6** stammenden Gutstroms **39** der Pflanzenreste ist in **Figur 5** mittels eines Pfeils **37** veranschaulicht. In der gezeigten Ausführung ist es besonders von Vorteil, dass der genannte Keilabschnitt **18** des Teilelement **10** in Strömungsrichtungen der Pflanzenreste betrachtet deutlich vor den Verteilvorrichtungen **8**, **9** angeordnet ist und sich das Teilelement **10** im Übrigen mittels seines Konstantabschnitts **19** bis zu den Verteilvorrichtungen **8**, **9** erstreckt. Die sich daraus ergebenden strömungstechnischen Vorteile hinsichtlich der mittels der Verteilvorrichtungen **8**, **9** erzeugten Luftströmungen sowie der Vorteil der ausbleibenden Klemmwirkung des Teilelements **10** sind vorstehend bereits dargelegt.

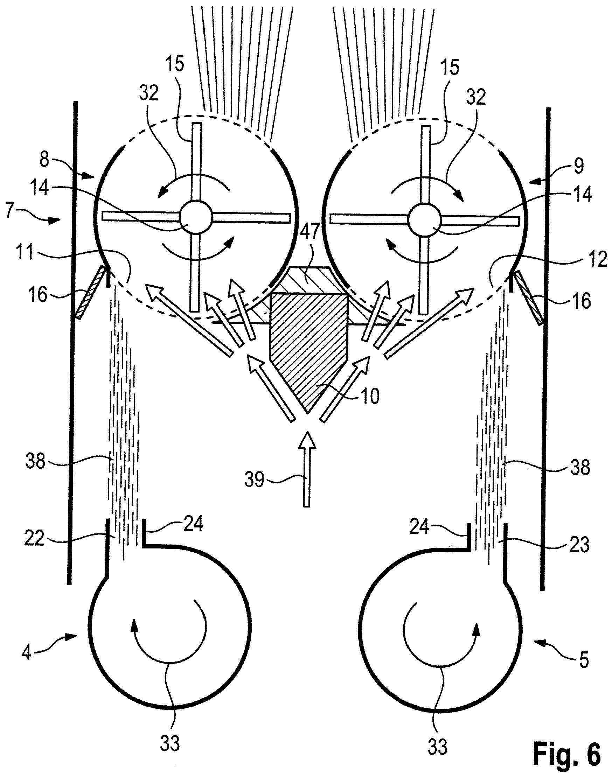

Die Fördereinrichtungen **4**, **5**, die in dem gezeigten Beispiel jeweils von einem Radialgebläse gebildet sind, übernehmen ihrerseits die vergleichsweise feinen Pflanzenreste aus der Siebstufe des Trennorgans **3**. Die Fördereinrichtungen **4**, **5** werden oftmals auch als "Spreugebläse" bezeichnet, da die aus der Siebstufe übernommenen Pflanzenreste in der Getreideernte insbesondere von Spreu gebildet sind. Die Fördereinrichtungen **4**, **5** sind in Strömungsrichtung der Pflanzenreste betrachtet den Verteilvorrichtungen **8**, **9** vorgeschaltet, sodass die von den Fördereinrichtungen **4**, **5** übernommenen Pflanzenreste vor dem Austragen derselben aus dem Mähdrescher **1** zunächst der Austrageinrichtung **7** zugeführt werden. Dies ist insbesondere aus den **Figuren 2****,** **3** **und** **6** ersichtlich. Erfindungsgemäß tritt dabei der Gutstrom **38**, der der Austrageinrichtung **7** ausgehend von den Fördereinrichtungen **4**, **5** zugeleitet wird, an Eintrittsstellen **11**, **12** in die Verteilvorrichtungen **8**, **9** ein, die außerhalb eines Wirkungsbereichs des Teilelements **10** liegen. Dies ergibt sich insbesondere aus den Draufsichten gemäß den **Figuren 2** **und** **6****.** Mittels dieser Anordnung der Eintrittsstellen **11**, **12** an den Verteilvorrichtungen **8**, **9** wird zumindest im Wesentlichen verhindert, dass der von dem Zerkleinerungsorgan **6** stammende Gutstrom **39** den von den Fördereinrichtungen **4**, **5** stammenden Gutstrom **38** beim Eintritt in die Verteilvorrichtungen **8**, **9** blockiert bzw. behindert. Letzteres ist insbesondere dann der Fall, wenn die vergleichsweise feinen Pflanzenreste, die den Gutstrom **38** ausmachen, an einer Stelle in eine jeweilige Verteilvorrichtung **8**, **9** eingebracht werden, an der das Gehäuse **13** der Verteilvorrichtung **8**, **9** bereits zu großen Teilen, gegebenenfalls sogar vollständig, mit den von dem Zerkleinerungsorgan **6** stammenden, groben Pflanzenresten gefüllt ist.

Zur Anordnung der Eintrittsstellen **11**, **12** außerhalb des Wirkungsbereichs des Teilelement **10** sind die Eintrittsstellen **11**, **12** jeweils in voneinander abgewandten Randbereichen **21** der Verteilvorrichtung **8**, **9** angeordnet, während das Teilelement **10** mittig zwischen den Verteilvorrichtungen **8**, **9** angeordnet ist. Hierdurch ist ein Wirkungsbereich des Teilelements **10** innerhalb eines Mittelbereichs **17** der Austrageinrichtung **7** beschränkt, wobei die Wirkung des Teilelements **10** darin besteht, dass innerhalb des Wirkungsbereichs ein Großteil der von dem Zerkleinerungsorgan **6** stammenden Pflanzenreste den Verteilvorrichtungen **8**, **9** zugeleitet wird. Dies ergibt sich daraus, dass besagte Pflanzenreste insbesondere mittig auf die Austrageinrichtung **7** treffen und mittels des Teilelements **10** lediglich nach links und rechts aufgeteilt, nicht jedoch gleichmäßig über eine gesamte Breite der Austrageinrichtung **7** verteilt werden. Es versteht sich daher, dass ein Anteil des Gutstroms **39**, der letztlich innerhalb des Mittelbereichs **17** der Austrageinrichtung **7** in selbige eintritt besonders groß ist, insbesondere mehr als 50 %, typischerweise sogar mehr als 70 % des gesamten Gutstroms **39** ausmacht. Mit anderen Worten findet ein Eintrag der von dem Zerkleinerungsorgan **6** stammenden Pflanzenreste in die Randbereiche **21** nur zu einem vergleichsweise geringen Anteil statt, sodass diese Randbereiche **21** besonders gut geeignet sind, die Eintrittsstellen **11**, **12** dort zu positionieren und auf diese Weise die Zuführung der beiden Gutströme **38**, **39** zu der Austrageinrichtung **7** zu entzerren.

Um einen Verlust von Pflanzenresten zu vermeiden sind die Verteilvorrichtungen **8**, **9** zudem in ihrem Mittelbereich **17** mittels eines Bodenelements **47** von unten her verschlossen. Das Bodenelement **47** erstreckt sich vorteilhafterweise bis zu einem vorderen Ende des Teilelements **10**, sodass insbesondere der von dem Zerkleinerungsorgan **6** stammende Gutstrom **39** darin gehindert wird, in vertikale Richtung betrachtet an den Verteilvorrichtungen **8**, **9** "vorbeizuströmen".

In dem gezeigten Beispiel sind dem vorderen Ende des Mähdreschers 1 zugewandte Vorderseiten **20** der Verteilvorrichtungen **8**, **9** vollständig geöffnet ausgebildet. Dies hat zur Folge, dass die Eintrittsstellen **11, 12** nicht zu ihren beiden Seiten hin baulich eingefasst sind, sondern in Richtung des Mittelbereichs **17** frei bleiben. Die Eintrittsstellen **11, 12** sind in diesem Fall insbesondere dadurch definiert, dass sie diejenigen Stellen darstellen, auf die die von den Fördereinrichtungen **4**, **5** übernommenen Pflanzenreste auftreffen. Die Eintrittsstellen **11, 12** können mithin mittels einer Konfiguration der Fördereinrichtungen **4**, **5** eingestellt werden, wobei insbesondere eine Zielrichtung der Fördereinrichtungen **4**, **5**, in deren Richtung die Pflanzenreste ausgehend von den Fördereinrichtungen **4**, **5** der Austrageinrichtung **7** zugeleitet werden, eingestellt werden kann. In dem gezeigten Beispiel erfolgt dies mittels Führungskanalstummeln **24**, wie nachstehend gesondert erläutert wird.

Die Verteilvorrichtungen **8**, **9** sind in dem gezeigten Beispiel in vorteilhafter Weise derart konfiguriert, dass die Rotoren **14** gegenläufig in den in den **Figuren 2** **und** **6** mittels der dort dargestellten Pfeile **32** veranschaulichten Drehrichtungen angetrieben werden. Auf diese Weise wird sichergestellt, dass die feinen Pflanzenreste, die von den Fördereinrichtungen **4**, **5** stammen und in die Verteilvorrichtungen **8**, **9** durch die Eintrittsstellen **11, 12** eintreten, zeitlich betrachtet vor den groben, von dem Zerkleinerungsorgan **6** stammenden Pflanzenresten in das Gehäuse **13** der jeweiligen Verteilvorrichtung **8**, **9** eintreten. Dies hat den Vorteil, dass das Gehäuse **13** an den Eintrittsstellen **11, 12** vergleichsweise "leer" ist, sodass die feinen Pflanzenreste ohne Weiteres eintreten können und sich sodann im Zuge der Zuführung der von dem Zerkleinerungsorgan **6** stammenden Pflanzenreste besonders gut innerhalb des gesamten Konglomerats sämtlicher Pflanzenreste verteilen. Letzteres hat wiederum die positive Folge, dass im Zuge des Auswurf sämtlicher Pflanzenreste mittels der Verteilvorrichtungen **8**, **9** an dem rückwärtigen Ende des Mähdreschers **1** eine gleichmäßige Verteilung der unterschiedlichen Arten von Pflanzenresten über die Arbeitsbreite des Mähdreschers **1** hinweg stattfinden kann. Eine Konzentration von feinen Pflanzenresten in bestimmten Bereichen hinter dem Mähdrescher **1**, wie sie im Stand der Technik zu beklagen ist, kann somit vermieden werden.

Zur weiteren Verbesserung der Zuführung des Gutstroms **38** zu der Austrageinrichtung **7** sind in dem gezeigten Beispiel ferner die Fördereinrichtungen **4**, **5** mit Führungskanalstummeln **24** versehen. Diese Führungskanalstummel **24**, die Austrittsöffnungen **22**, **23** der Fördereinrichtungen **4**, **5** aufweisen, bieten die Möglichkeit, dem jeweils aus den Fördereinrichtungen **4**, **5** stammenden Gutstrom **38** eine Strömungsrichtung aufzuprägen. Auf diese Weise können die Pflanzenreste gewissermaßen in Richtung der Eintrittsstellen **11**, **12** "gezielt" werden. In dem gezeigten Beispiel ist es zudem von besonderem Vorteil, dass die Austrittsöffnungen **22**, **23** in voneinander abgewandten Randbereichen der Fördereinrichtungen **4**, **5** angeordnet sind, sodass sowohl zwischen den Austrittsöffnungen **22**, **23** und den diesen jeweils zugeordneten Eintrittsstellen **11**, **12** vorliegenden Strecken möglichst kurz sind und zum anderen eine Strömungsrichtung möglichst parallel zu einer Längsachse des Mähdreschers **1** ausgerichtet ist. Zum Auswurf der Pflanzenreste aus den Fördereinrichtungen **4**, **5** an deren voneinander abgewandten seitlichen Randbereichen sind die Fördereinrichtungen **4**, **5** in dem gezeigten Beispiel derart konfiguriert, dass deren Gebläserotoren gemäß den in Figur **2** dargestellten Pfeilen **33** gegenläufig rotieren.

Weiterhin ist die Austrageinrichtung **7** des erfindungsgemäßen Mähdreschers **1** in dem gezeigten Beispiel mit zwei Abscheidebauteilen **16** ausgestattet, wobei jeweils ein Abscheidebauteil **16** einer der Verteilvorrichtungen **8**, **9** zugeordnet ist. Die Abscheidebauteile **16** sind derart positioniert, dass sie in Rotationsrichtung eines jeweiligen Rotors **14** einer jeweiligen Verteilvorrichtung **8**, **9** betrachtet vor der jeweiligen Eintrittsstelle **11**, **12** angeordnet sind. Auf diese Weise dienen die Abscheidebauteile **16** dazu, einen mittels der Verteilvorrichtungen **8**, **9** erzeugten tangential Luftstrom radial abzuleiten. Dies ist in **Figur 2** mittels der dort dargestellten Pfeile **46** veranschaulicht. Die Abscheidung dieses tangentialen Luftstroms ist insoweit von Vorteil, als dieser Luftstrom sodann keinen störenden Einfluss auf die von den Fördereinrichtungen **4**, **5** stammenden Pflanzenreste ausüben kann.

### Bezugszeichenliste

- 1: Mähdrescher
- 2: Dreschorgan
- 3: Trennorgan
- 4: Fördereinrichtung
- 5: Fördereinrichtung
- 6: Zerkleinerungsorgan
- 7: Austrageinrichtung
- 8: Verteilvorrichtung
- 9: Verteilvorrichtung
- 10: Teilelement
- 11: Eintrittsstelle
- 12: Eintrittsstelle
- 13: Gehäuse
- 14: Rotor
- 15: Schaufelelement
- 16: Abscheidebauteil
- 17: Mittelbereich
- 18: Keilabschnitt
- 19: Konstantabschnitt
- 20: Vorderseite
- 21: Randbereich
- 22: Austrittsöffnung
- 23: Austrittsöffnung
- 24: Führungskanalstummel
- 25: Schneidwerk
- 26: Gebläse
- 27: Pfeil
- 28: Hordenschüttler
- 29: Rücklaufboden
- 30: Obersieb
- 31: Untersieb
- 32: Pfeil
- 33: Pfeil
- 34: Antrieb
- 35: Schlagleiste
- 36: Pfeil
- 37: Pfeil
- 38: Gutstrom
- 39: Gutstrom
- 40: Pflanzen
- 41: Schrägförderer
- 42: Dreschkorb
- 43: Hebeeinrichtung
- 44: Korntank
- 45: Welle
- 46: Pfeil
- 47: Bodenelement

## Patentansprüche

1. Mähdrescher (1) zum Ernten von Pflanzen, umfassend
- mindestens ein Dreschorgan (2), mittels dessen Früchte geernteter Pflanzen von Pflanzenresten der geernteten Pflanzen ablösbar sind,
- mindestens ein Trennorgan (3) zur Trennung der abgelösten Früchte von den Pflanzenresten,
- mindestens eine Fördereinrichtung (4, 5) zur Übernahme eines Gutstroms von Pflanzenresten von dem Trennorgan (3),
- mindestens ein Zerkleinerungsorgan (6) zur Zerkleinerung von Pflanzenresten sowie
- mindestens eine Austrageinrichtung (7), mittels derer ein Gutstrom zerkleinerter Pflanzenreste von dem Zerkleinerungsorgan (6) übernehmbar und aus dem Mähdrescher (1) austragbar sind,
wobei die Austrageinrichtung (7) mindestens zwei nebeneinander angeordnete Verteilvorrichtungen (8, 9) sowie mindestens ein Teilelement (10) umfasst, mittels dessen der von dem Zerkleinerungsorgan (6) stammende Gutstrom auf die beiden Verteilvorrichtungen (8, 9) aufteilbar ist,
wobei die Austrageinrichtung (7) derart hinter der Fördereinrichtung (4, 5) angeordnet ist, dass der mittels der Fördereinrichtung (4, 5) geförderte Gutstrom an die Austrageinrichtung (7) übergebbar ist,
**dadurch gekennzeichnet, dass**
an den Verteilvorrichtungen (8, 9) angeordnete Eintrittsstellen (11, 12) für den von der Fördereinrichtung (4, 5) stammenden Gutstrom außerhalb eines Wirkungsbereichs des Teilelements (10) angeordnet sind, wobei das Teilelement (10) in einem Mittelbereich (17) zwischen den Verteilvorrichtungen (8, 9) angeordnet ist und sich in Richtung des Zerkleinerungsorgans (6) erstreckt, sodass der von dem Zerkleinerungsorgan (6) stammende Gutstrom an dem Teilelement (10) in zwei Teilströme aufteilbar ist, die jeweils einer der Verteilvorrichtungen (8, 9) zuführbar sind.

2. Mähdrescher (1) nach Anspruch 1, **dadurch gekennzeichnet, dass** die Verteilvorrichtungen (8, 9) jeweils von einem Radialverteiler gebildet sind, wobei die Radialverteiler jeweils ein Gehäuse (13) sowie einen innerhalb des Gehäuses (13) drehantreibbaren Rotor (14) umfassen, der mindestens ein Schaufelelement (15) umfasst, mittels dessen in das Gehäuse (13) eintretende Gutströme förderbar sind.

3. Mähdrescher (1) nach Anspruch 2, **dadurch gekennzeichnet, dass** eine in einem Gehäuse (13) eines jeweiligen Radialverteilers ausgebildete Eintrittsstelle (11, 12) für den von der Fördereinrichtung (4, 5) stammenden Gutstrom in Rotationsrichtung des Rotors (14) betrachtet vor dem Teilelement (10) angeordnet ist.

4. Mähdrescher (1) nach Anspruch 2 oder 3, **dadurch gekennzeichnet, dass** die Austrageinrichtung (7) zwei Abscheidebauteile (16), insbesondere Abscheidebleche, umfasst, die jeweils einem der Radialverteiler zugeordnet sind, wobei ein jeweiliges Abscheidebauteil (16) an dem Gehäuse (13) des jeweils zugeordneten Radialverteilers angeordnet ist, sodass mittels des Abscheidebauteils (16) ein mittels des Rotors (14) erzeugter Luftstrom radial nach außen abscheidbar ist.

5. Mähdrescher (1) nach Anspruch 4, **dadurch gekennzeichnet, dass** das einem der Radialverteiler jeweils zugeordnete Abscheidebauteil (16) in Rotationsrichtung des Rotors (14) betrachtet vor der Eintrittsstelle (11, 12) des von der Fördereinrichtung (4, 5) stammenden Gutstroms angeordnet ist.

6. Mähdrescher (1) nach einem der vorhergehenden Ansprüche, **dadurch gekennzeichnet, dass** das Teilelement (10) einen Keilabschnitt (18) und einen sich an den Keilabschnitt (18) anschließenden Konstantabschnitt (19) aufweist, wobei sich ein Querschnitt des Teilelements (10) in dem Keilabschnitt (18) erweitert und in dem Konstantabschnitt (19) konstant ist.

7. Mähdrescher (1) nach Anspruch 6, **dadurch gekennzeichnet, dass** sich das Teilelement (10) so weit in Richtung des Zerkleinerungsorgans (6) erstreckt, dass sich der Keilabschnitt (18) - in Strömungsrichtung des von dem Zerkleinerungsorgan (6) stammenden Gutstroms betrachtet - außerhalb eines Wirkungsbereichs der Verteilvorrichtungen (8, 9) befindet.

8. Mähdrescher (1) nach einem der Ansprüche 1 bis 7, **dadurch gekennzeichnet, dass** die Verteilvorrichtungen (8, 9) jeweils an einer einem Frontende des Mähdreschers (1) zugewandten Vorderseite (20) geöffnet ausgebildet sind, wobei die der jeweiligen Verteilvorrichtung (8, 9) zugeordnete Eintrittsstelle (11, 12) des von der Fördereinrichtung (4, 5) stammenden Gutstroms in einem der jeweils anderen Verteilvorrichtung (8, 9) abgewandten, seitlichen Randbereich (21) der jeweiligen Vorderseite (20) angeordnet ist.

9. Mähdrescher (1) nach Anspruch 8, **dadurch gekennzeichnet, dass** der von dem Zerkleinerungsorgan (6) stammende Gutstrom den Verteilvorrichtungen (8, 9) über eine gesamte Breite der jeweiligen Vorderseiten (20) zuführbar ist, wobei vorzugsweise ein Hauptanteil des Gutstroms, vorzugsweise mindestens 50 % desselben, in einander zugewandten Mittelbereichen (17) der Vorderseiten (20) zuführbar ist.

10. Mähdrescher (1) nach einem der Ansprüche 1 bis 9, **dadurch gekennzeichnet, dass** die Fördereinrichtung (4, 5) von einem Radialgebläse gebildet ist, mittels dessen der von dem Trennorgan (3) übernommene Gutstrom beschleunigbar und in Richtung der Austrageinrichtung (7) blasbar ist.

11. Mähdrescher (1) nach einem der Ansprüche 1 bis 10, **gekennzeichnet durch** zwei nebeneinander angeordnete Fördereinrichtungen (4, 5), die jeweils von einem Radialgebläse gebildet sind, wobei Austrittsöffnungen (22, 23) der Radialgebläse in voneinander abgewandten, seitlichen Randbereichen der Radialgebläse ausgebildet sind.

12. Mähdrescher (1) nach Anspruch 11, **dadurch gekennzeichnet, dass** die Radialgebläse jeweils einer der Verteilvorrichtungen (8, 9) zugeordnet sind, wobei sich an die Radialgebläse jeweils anschließende Führungskanalstummel (24) jeweils auf eine zugeordnete Eintrittsstelle (11, 12) der jeweils zugeordneten Verteilvorrichtung (8, 9) gerichtet sind.

## Claims

1. A combine harvester (1) for harvesting plants, comprising:
- at least one threshing means (2), by means of which fruit from harvested plants can be detached from plant debris from the harvested plants,
- at least one separating means (3) for separating the detached fruits from the plant debris,
- at least one conveying device (4, 5) for transferring a material flow of plant debris from the separating means (3),
- at least one comminuting means (6) for comminuting plant debris, as well as
- at least one discharge device (7), by means of which a material flow of comminuted plant debris can be transferred from the comminuting means (6) and discharged from the combine harvester (1),
wherein the discharge device (7) comprises at least two distributing devices (8, 9) disposed side by side as well as a dividing element (10), by means of which the material flow originating from the comminuting means (6) can be divided onto the two distributing devices (8, 9),
wherein the discharge device (7) is disposed behind the conveying device (4, 5) in a manner such that the material flow conveyed by means of the conveying device (4, 5) can be transferred to the discharge device (7),
**characterized in that**
entry points (11, 12) for the material flow originating from the conveying device (4, 5) disposed on the distributing devices (8, 9) are disposed outside an effective range of the dividing element (10), wherein the dividing element (10) is disposed in a central region (17) between the distributing devices (8, 9) and extends in the direction of the comminuting means (6), so that the material flow originating from the comminuting means (6) can be divided at the dividing element (10) into two substreams which can respectively be fed to one of the distributing devices (8, 9).

2. The combine harvester (1) according to claim 1, **characterized in that** the distributing devices (8, 9) are each formed by a radial distributor, wherein the radial distributors each comprise a housing (13) as well as a rotor (14) which can be driven in rotation inside the housing (13) which comprises at least one impeller blade element (15) by means of which material flows which enter the housing (13) can be conveyed.

3. The combine harvester (1) according to claim 2, **characterized in that** an entry point (11, 12) in a housing (13) of a respective radial distributor is disposed upstream of the dividing element (10) considered in the direction of rotation of the rotor (14) and by the material flow originating from the conveying device (4, 5).

4. The combine harvester (1) according to claim 2 or claim 3, **characterized in that** the discharge device (7) comprises two separating components (16), in particular separating plates, which are each associated with a respective radial distributor, wherein a respective separating component (16) is disposed on the housing (13) of the respective associated radial distributor so that by means of the separating component (16), a flow of air produced by means of the rotor (14) can be separated radially outwardly.

5. The combine harvester (1) according to claim 4, **characterized in that** the separating component (16) associated with a respective radial distributor is disposed upstream of the entry point (11, 12) for the material flow originating from the conveying device (4, 5) considered in the direction of rotation of the rotor (14).

6. The combine harvester (1) according to one of the preceding claims, **characterized in that** the dividing element (10) has a wedge section (18) and a constant section (19) which adjoins the wedge section (18), wherein a cross section of the dividing element (10) widens in the wedge section (18) and is constant in the constant section (19).

7. The combine harvester (1) according to claim 6, **characterized in that** the dividing element (10) extends in the direction of the comminuting means (6) to an extent such that the wedge section (18) - in the direction of flow of the material flow originating from the comminuting means (6) - is located outside an effective range of the distributing devices (8, 9).

8. The combine harvester (1) according to one of claims 1 to 7, **characterized in that** the distributing devices (8, 9) are each constructed so as to be open at a front side (20) of the combine harvester (1) facing a front end, wherein the entry point (11, 12) for the material flow originating from the conveying device (4, 5) associated with the respective distributing device (8, 9) is disposed in a lateral edge region (21) of the respective front side (20) facing away from the respective other distributing device (8, 9).

9. The combine harvester (1) according to claim 8, **characterized in that** the material flow originating from the comminuting means (6) can be fed into the distributing devices (8, 9) over the entire width of the respective front side (20), wherein preferably, a major proportion of the material flow, preferably at least 50% thereof, can be fed in within central regions (17) of the front sides (20) which face each other.

10. The combine harvester (1) according to one of claims 1 to 9, **characterized in that** the conveying device (4, 5) is formed by a radial compressor, by means of which the material flow transferred from the separating means (3) can be accelerated and can be blown in the direction of the discharge device (7).

11. The combine harvester (1) according to one of claims 1 to 10, **characterized by** two conveying devices (4, 5) disposed adjacent to each other which are respectively formed by a radial compressor, wherein outlet openings (22, 23) from the radial compressor are constructed in lateral edge regions of the radial compressor which face away from each other.

12. The combine harvester (1) according to claim 11, **characterized in that** each radial compressor is associated with one of the distributing devices (8, 9), wherein guide duct ends (24) which are connected to each respective radial compressor are respectively directed onto an associated entry point (11, 12) of the respective associated distributing device (8, 9).

## Revendications

1. Moissonneuse-batteuse (1) pour récolter des plantes, incluant
- au moins un organe de battage (2) au moyen duquel des fruits de plantes récoltées sont détachables de restes de plantes des plantes récoltées,
- au moins un organe de séparation (3) pour séparer les fruits détachés des restes de plantes,
- au moins un équipement de convoyage (4, 5) pour prendre en charge un flux de produit de restes de plantes à partir de l'organe de séparation (3) ,
- au moins un organe de broyage (6) pour le broyage de restes de plantes, ainsi que
- au moins un équipement d'éjection (7) au moyen duquel un flux de produit de restes de plantes broyés peut être pris en charge à partir de l'organe de broyage (6) et être éjecté hors de la moissonneuse-batteuse (1),
l'équipement d'éjection (7) incluant au moins deux dispositifs d'épandage disposés l'un à côté de l'autre (8, 9) ainsi qu'au moins un élément de répartition (10) au moyen duquel le flux de produit provenant de l'organe de broyage (6) peut être réparti vers les deux dispositifs d'épandage (8, 9),
l'équipement d'éjection (7) étant disposé derrière l'équipement de convoyage (4, 5), de façon que le flux de produit convoyé au moyen de l'équipement de convoyage (4, 5) puisse être transmis à l'équipement d'éjection (7),
**caractérisée en ce que**
des points d'entrée (11, 12) disposés sur les dispositifs d'épandage (8, 9) pour le flux de produit provenant de l'équipement de convoyage (4, 5) sont disposés à l'extérieur d'une zone d'action de l'élément de répartition (10), l'élément de répartition (10) étant disposé dans une zone centrale (17) entre les dispositifs d'épandage (8, 9) et s'étendant en direction de l'organe de broyage (6), de façon que le flux de produit provenant de l'organe de broyage (6) puisse être séparé au niveau de l'élément de répartition (10) en deux flux partiels qui peuvent être dirigés respectivement vers un des dispositifs d'épandage (8, 9).

2. Moissonneuse-batteuse (1) selon la revendication 1, **caractérisée en ce que** les dispositifs d'épandage (8, 9) sont formés respectivement par un épandeur radial, les épandeurs radiaux incluant respectivement un carter (13) ainsi qu'un rotor (14) qui est entraîné en rotation à l'intérieur du carter (13) et qui inclut au moins un élément de pale (15) au moyen duquel peuvent être convoyés des flux de produit entrant dans le carter (13).

3. Moissonneuse-batteuse (1) selon la revendication 2, **caractérisée en ce qu'**un point d'entrée (11, 12) ménagé dans un carter (13) d'un épandeur radial respectif pour le flux de produit provenant de l'équipement de convoyage (4, 5) est disposé avant l'élément de répartition (10) par rapport au sens de rotation du rotor (14).

4. Moissonneuse-batteuse (1) selon la revendication 2 ou 3, **caractérisée en ce que** l'équipement d'éjection (7) inclut deux composants de séparation (16), en particulier tôles de séparation, qui sont associées respectivement à un des épandeurs radiaux, un composant de séparation respectif (16) étant disposé sur le carter (13) de l'épandeur radial respectivement associé, de façon qu'un courant d'air produit au moyen du rotor (14) puisse être séparé radialement vers l'extérieur au moyen du composant de séparation (16).

5. Moissonneuse-batteuse (1) selon la revendication 4, **caractérisée en ce que** le composant de séparation (16) associé respectivement à un des épandeurs radiaux est disposé, par rapport au sens de rotation du rotor (14), avant le point d'entrée (11, 12) du flux de produit provenant de l'équipement de convoyage (4, 5).

6. Moissonneuse-batteuse (1) selon une des revendications précédentes, **caractérisée en ce que** l'élément de répartition (10) comporte une portion en coin (18) et une portion constante (19) se raccordant à la portion en coin (18), une section transversale de l'élément de répartition (10) s'élargissant dans la portion en coin (18) et étant constante dans la portion constante (19) .

7. Moissonneuse-batteuse (1) selon la revendication 6, **caractérisée en ce que** l'élément de répartition (10) s'étend en direction de l'organe de broyage (6) jusqu'à ce que la portion en coin (18) - par rapport au sens d'écoulement du flux de produit provenant de l'organe de broyage (6) - se trouve à l'extérieur d'une zone d'action des dispositifs d'épandage (8, 9).

8. Moissonneuse-batteuse (1) selon une des revendications 1 à 7, **caractérisée en ce que** les dispositifs d'épandage (8, 9) sont respectivement conçus de manière ouverte sur un côté avant (20) tourné vers une extrémité avant de la moissonneuse-batteuse (1), le point d'entrée (11, 12), associé au dispositif d'épandage respectif (8, 9), du flux de produit provenant de l'équipement de convoyage (4, 5) étant disposé dans une zone latérale (21) du côté avant respectif (20) située à l'opposé de l'autre dispositif d'épandage respectif (8, 9).

9. Moissonneuse-batteuse (1) selon la revendication 8, **caractérisée en ce que** le flux de produit provenant de l'organe de broyage (6) peut être dirigé vers les dispositifs d'épandage (8, 9) sur une largeur totale des côtés avant respectifs (20), de préférence une majeure partie du flux de produit, de préférence au moins 50 % de celui-ci, pouvant être dirigée vers des zones centrales tournées l'une vers l'autre (17) des côtés avant (20) .

10. Moissonneuse-batteuse (1) selon une des revendications 1 à 9, **caractérisée en ce que** l'équipement de convoyage (4, 5) est formé par un ventilateur radial au moyen duquel le flux de produit pris en charge à partir de l'organe de séparation (3) peut être accéléré et soufflé en direction de l'équipement d'éjection (7).

11. Moissonneuse-batteuse (1) selon une des revendications 1 à 10, **caractérisée par** deux équipements de convoyage qui sont disposés l'un à côté de l'autre (4, 5) et qui sont formés respectivement par un ventilateur radial, des ouvertures de sortie (22, 23) des ventilateurs radiaux étant ménagées dans des zones latérales des ventilateurs radiaux situées à l'opposé l'une de l'autre.

12. Moissonneuse-batteuse (1) selon la revendication 11, **caractérisée en ce que** les ventilateurs radiaux sont associés respectivement à un des dispositifs d'épandage (8, 9), des embouts de canal de guidage (24) raccordés respectivement aux ventilateurs radiaux étant dirigés respectivement vers un point d'entrée associé (11, 12) du dispositif d'épandage respectivement associé (8, 9).
